# EUROPÄISCHE PATENTSCHRIFT

(11) **EP 2 852 735 B1**
(45) Veröffentlichungstag und Bekanntmachung des Hinweises auf die Patenterteilung: **27.04.2016**
(21) Anmeldenummer: 12775033.9
(22) Anmeldetag: 23.10.2012
(51) Int. Cl.: F01D 9/02, F01D 25/28, F23R 3/60, F23R 3/00

(54) **GASTURBINE**
GAS TURBINE
TURBINE À GAZ

(30) Priorität: 24.10.2011 EP 11186387
(43) Veröffentlichungstag der Anmeldung: 01.04.2015
(73) Patentinhaber: ALSTOM Technology Ltd, 5400 Baden (CH)
(72) Erfinder: TSCHUOR, Remigi, CH-5210 Windisch (CH); NARANCIC, Sinisa, 47241 Tusilovic (HR); FILKORN, Guenter, CH-5415 Nussbaumen (CH)
(74) Vertreter: General Electric Technology GmbH
(86) Internationale Anmeldenummer: PCT/EP2012/070930
(87) Internationale Veröffentlichungsnummer: WO 2013/060663

(56) Entgegenhaltungen:
- EP-A1- 2 249 003
- WO-A1-2009/103658
- GB-A- 638 807
- GB-A- 1 018 479
- GB-A- 2 102 897
- US-A- 4 821 522
- US-B1- 7 082 766

## Beschreibung

### TECHNISCHES GEBIET

Die vorliegende Erfindung bezieht sich auf das Gebiet der Technik von Gasturbinen. Sie betrifft den Übergangsbereich zwischen einer ringförmigen Brennkammer einer nachfolgenden Turbine.

### STAND DER TECHNIK

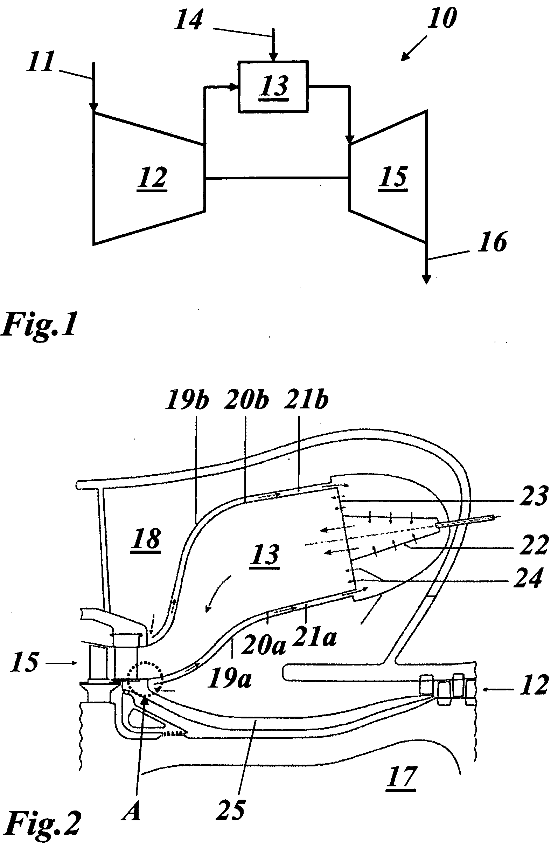

Die vorliegende Erfindung geht aus von einer Gasturbine, die im einfachsten Fall ein Schema aufweist, wie es in Fig. 1 wiedergegeben ist. Die Gasturbine 10 der Fig. 1 umfasst einen Verdichter 12, eine Brennkammer 13 und eine Turbine 15. Der Verdichter 12 saugt über einen Lufteinlass 11 Verbrennungsluft an und verdichtet diese. Die verdichtete Luft wird in die Brennkammer 13 eingeführt und dort zur Verbrennung eines Brennstoffs 14 verwendet. Das entstehende Heissgas wird in der nachfolgenden Turbine 15 unter Arbeitsleistung entspannt und verlässt Turbine 15 als Abgas 16.

Moderne (stationäre) Industrie-Gasturbinen (IGT) werden in der Regel mit ringförmigen oder Ringbrennkammern ausgelegt. Bei meist kleineren IGTs werden die Brennkammern als sogenannte "Can Annular Combustors" ausgeführt.

Bei einer IGT mit ringförmiger oder Ringbrennkammer ist der Brennraum begrenzt durch die Seitenwände sowie der Eintritts- und Austrittsebene des Heissgases. Die Brennkammerseitenwände werden dabei entweder segmentweise aus Schalenelementen zusammengesetzt oder als Vollschalen ausgeführt. Bei der Verwendung von Vollschalen ergibt sich montagebedingt die Notwendigkeit einer Trennebene, die es erlaubt das Oberteil abzunehmen, um zum Beispiel den Gasturbinen-Rotor zu montieren bzw. zu demontieren. Die Trennebene weist entsprechend zwei Trennebenenschweissnähte auf, die sich z.B. auf der Höhe der Maschinenachse befinden (3- und 9-Uhr-Position). Die unteren und oberen Halbschalen müssen u.a. konvektiv gekühlt werden.

### Funktion der Brennkammerschalen /

Die Brennkammerschalen ("Combustor Transition Duct") haben die folgenden Funktionen:
- Sie dichten zwei Plena/Kammern ab.
- Sie müssen auch untereinander dichten (Montage mittels einer Trennebene, i.d. Regel an 3- und 9-Uhr-Position).
- Sie werden, mit Ausnahme der Trennebene, rotationssymmetrisch ausgeführt.
- Sie müssen bei der Montage der Brennkammerhalbschalen in der Trennebene ineinander/aneinander geführt werden.
- Die Brennkammer-Innenschalen oder inneren Brennkammerschalen müssen an der Trennebene "blind' ineinander geführt werden (kein Zugang für eine visuelle Kontrolle der Verbindungsebene, da diese von den Brennkammer-Innenschalen abgedeckt ist).
- Sie sollen keine axialen oder radialen Kräfte aufnehmen müssen.
- Sie können, müssen jedoch nicht, selbsttragend ausgeführt werden (keine Trägerstruktur).
- Sie müssen (grossen) axialen und radialen Bewegungsspielraum aufweisen, insbesondere während transienter Betriebszustände.
- Sie müssen temperaturfest sein (Zeitstandfestigkeit/Dauerfestigkeit)
- Eigenschwingungen sollen nach Möglichkeit gedämpft werden (Abstützung der Schalen).

Fig. 2 zeigt einen die Brennkammer umfassenden Ausschnitt einer beispielhaften Gasturbine mit Ringbrennkammer. Der Ausgang des Verdichters 12 mit seinem Leit- und Laufschaufeln ist hier auf der rechten Seite zu erkennen, auf der gegenüberliegenden Seite befindet sich der Einlassbereich der Turbine 15 mit ihren Leit- und Laufschaufeln. Zwischen dem Verdichterausgang und dem Turbineneinlassbereich befinden sich eine den Rotor 17 umgebende Wellenabdeckung 25. Der Einlassbereich der Wellenabdeckung ist als Verdichter-Diffusor mit in Strömungsrichtung zunehmendem Strömungsquerschnitt gestaltet, durch den die verdichtete Luft in ein Plenum 18 strömt, welches die ringförmige Brennkammer 13 umgibt. Die Brennkammer 13 ist aufgebaut aus einer inneren Brennkammerschale 20a und einer äusseren Brennkammerschale 20b. Auf den jeweiligen Aussenseiten der Brennkammerschalen 20a,b sind mit Abstand innere bzw. äussere Kühlhemden 19a bzw. 19b angeordnet, die mit der zugehörigen Brennkammerschale jeweils eine innere Kühlluftführung 21 a und eine äussere Kühlluftführung 21 b bilden.

Durch diese Kühlluftführungen 21 a,b strömt Luft aus dem Plenum 18 in den vor der Brennkammer 13 liegenden Eingangsbereich, in welchem die eigentlichen Brenner 22 (im vorliegenden Fall so genannte Doppelkegelbrenner) angeordnet sind. Die durch die Kühlluftführungen 21 a,b herangeführte Luft tritt einerseits in die Brenner 22 ein und wird dort mit Brennstoff vermischt. Andererseits tritt Luft durch die Rückwand 23 der Brennkammer 13 direkt in die Brennkammer ein. Wichtig für einen störungsfreien Betrieb der Gasturbine ist der Fig. 2 mit einem punktierten Kreis und dem Bezugszeichen A markierte Übergangsbereich zwischen der Brennkammer 13 und der Turbine 15.

Innen- und Aussenschale der Brennkammer sind thermisch und mechanisch im Betrieb stark beansprucht. Die Material-Festigkeitseigenschaften der Schalen sind stark temperaturabhängig. Um diese Materialtemperatur unter dem maximal zulässigen Materialtemperaturniveau zu halten, werden die Schalenelemente - wie im Zusammenhang mit der Fig. 2 und den dort gezeigten Kühlhemden 19a,b bereits beschrieben - konvektiv gekühlt.

Formgebung und die thermische hohe Belastung nahe dem Turbineneintritt erfordern vor allem in diesem Bereich einen konstant hohen Wärmeübergang auch auf der Kühlluftseite. Beide Brennkammerschalen erreichen, bevor die Brennkammer gezündet wird, mindestens die Temperatur der Verdichterendluft. Sobald die Brenner gezündet werden, steigt die Metalltemperatur der beiden Brennkammerschalen weiter an.

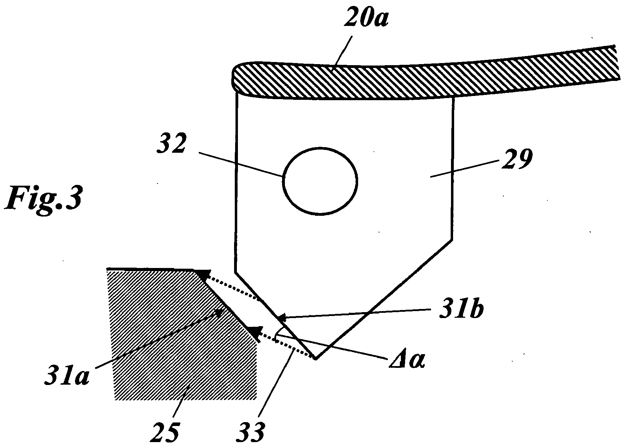

Aufgrund der hohen Metalltemperatur der Brennkammerschalen dehnen sich die Schalen axial und radial aus (siehe Ausdehnungsrichtung 33 in Fig. 3. Diese Ausdehnung ist insbesondere an der Schnittstelle zum Eintritt der Turbine (Innen- und Aussenplattform der 1. Leitschaufelreihe;) gut messbar. Diese Ausdehnung erfolgt kontinuierlich und über einen bestimmten Zeitraum, während des Startprozesses und bei Laständerungen der Gasturbine. Der gleiche Prozess erfolgt rückläufig beim Abkühlen der Brennkammer (Schrumpfprozess).

In der Praxis hat sich nun herausgestellt, dass durch die gerade beschriebene Art und Konfiguration des Übergangs zwischen Brennkammer und Turbineneinlass unerwünschte Abnützungsspuren bzw. Abnützungen entstehen, die vermieden werden müssen. Durch den damit verbundenen Verschleiss während des Betriebs der Gasturbine wird die Funktionalität beeinträchtigt. Weiterhin wird auch die Lebensdauer beeinträchtigt bzw. reduziert. Schliesslich ist auch ein Mehraufwand bei der Rekonditionierung der Maschine zu erwarten.

Aus der US 7 082 766 B1 ist eine Gasturbine, umfassend einen Verdichter, eine ringförmige Brennkammer und eine Turbine bekannt, wobei die Brennkammerschale mit am Umfang verteilt angebrachten Abstützelementen durch die im Betrieb auftretende thermische Ausdehnung an eine konische Kontur der Wellenabdeckung anstösst und sich daran abstützt.

### DARSTELLUNG DER ERFINDUNG

Es ist daher ein Aspekt der Erfindung, eine Gasturbine der eingangs genannten Art so auszubilden, dass die Nachteile der bisherigen Lösung vermieden und insbesondere die transienten Bewegungen der Brennkammerschalen besser aufgefangen und abgestützt werden.

Die Erfindung geht von einer Gasturbine aus, welche einen Verdichter, eine ringförmige Brennkammer und eine Turbine umfasst, wobei die Brennkammer zur Einleitung der in der Brennkammer entstehenden heissen Gase in die nachfolgende Turbine in einem Übergangsbereich mit einer Brennkammerschale den Turbineneinlass anschliesst. Um eine durch thermische Ausdehnung bedingte relative Bewegung zwischen Brennkammer und Turbineneinlass zu ermöglichen ist, weist die Brennkammer-Innenschale am Umfang verteilt angebrachte Abstützelemente auf. Durch die im Betrieb auftretende thermische Ausdehnung stossen diese Abstützelemente an eine konische Kontur an der Wellenabdeckung an und sich stützen sich daran ab.

Ein Aspekt der Erfindung ist eine konische Kontur, die mit der Maschinenachse einen Winkel einschliesst, der ein Aufgleiten der Brennkammer-Innenschale mit den Abstützelementen auf die konische Kontur ermöglicht.

Neben der Gasturbine sind die Brennkammer-Innenschale und die Wellenabdeckung für eine Gasturbine Gegenstand der Offenbarung.

Die Brennkammer-Innenschale umfast am Austrittsende auf der den Heissgasen abgewandten Seite am Umfang verteilt angebrachte Abstützelemente, die eine Anschrägung aufweisen, die im eingebauten Zustand parallel zu einer konische Kontur der Wellenabdeckung verlaufen. Die Anschrägung schliesst mit der Maschinenachse einen Winkel ein, der ein Aufgleiten der Abstützelementen der Brennkammer-Innenschale auf die konische Kontur der Wellenabdeckung ermöglicht.

Die Wellenabdeckung für eine Gasturbine weist am stromabwärtigen Ende auf der Aussenseite eine konische Kontur auf, die im eingebauten Zustand mit der Maschinenachse einen Winkel einschliesst. Dieser Winkel ermöglicht ein Aufgleiten einer Brennkammer-Innenschale mit Abstützelementen auf die konische Kontur.

Eine Ausgestaltung der Gasturbine zeichnet sich dadurch aus, dass die Abstützelemente als radial abstehende, in axialer Richtung orientierte Abstützplatten bzw. Finnen ausgebildet sind, dass die Abstützplatten bzw. Finnen eine der konischen Kontur gegenüberliegende und der konischen Kontur im Winkel entsprechende Abschrägung aufweisen und dass zwischen der konischen Kontur und der Abschrägung eine von Null verschiedene Einbautoleranz vorgesehen ist.

Eine andere Ausgestaltung der Gasturbine ist dadurch gekennzeichnet, dass sich die Brennkammerschale bei ihrer thermischen Ausdehnung in eine Ausdehnungsrichtung ausdehnt, die mit der konischen Kontur einen von Null verschiedenen Differenzwinkel einschliesst.

Insbesondere liegt der Differenzwinkel im Bereich zwischen 2° und 15°, vorzugsweise im Bereich zwischen 5° und 10°, insbesondere im Bereich zwischen 7° und 8° liegt, und beträgt der Winkel, den die konische Kontur mit der Maschinenachse einschliesst, zwischen 20° und 30°, insbesondere zwischen 24° und 26°.

Gemäss einer weiteren Ausgestaltung liegt die Einbautoleranz im Bereich zwischen 1 mm und 10mm, vorzugsweise zwischen 2mm und 8mm, insbesondere zwischen 3mm und 4mm.

Eine andere Ausgestaltung ist dadurch gekennzeichnet, dass die Wellenabdeckung aus Grauguss ist und die Abstützelemente aus einer Nickelbasislegierung oder einem bevorzugt austenitisch ferritischer Stahl bestehen.

Eine noch andere Ausgestaltung ist dadurch gekennzeichnet, dass die Ringbrennkammer aus einzelnen Segmenten zusammengesetzt ist, und dass pro Segment zwei Abstützelemente vorgesehen sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: das stark vereinfachte Schaltschema einer Gasturbine;
- Fig. 2: in einem Ausschnitt den Längsschnitt durch eine Gasturbine mit Ringbrennkammer im Bereich der Brennkammer;
- Fig. 3: in einer vereinfachten Darstellung die relative Bewegung zwischen Brennkammer und Wellenabdeckung bzw. Verdichter-Diffusor aufgrund der thermischen Ausdehnung im Betrieb;
- Fig. 4: die Konfiguration des Übergangsbereichs gemäss einem Ausführungsbeispiel der Erfindung; und
- Fig. 5: den Austrittsbereich der Brennkammer aus Fig. 4 in einer perspektivischen Darstellung.

### WEGE ZUR AUSFÜHRUNG DER ERFINDUNG

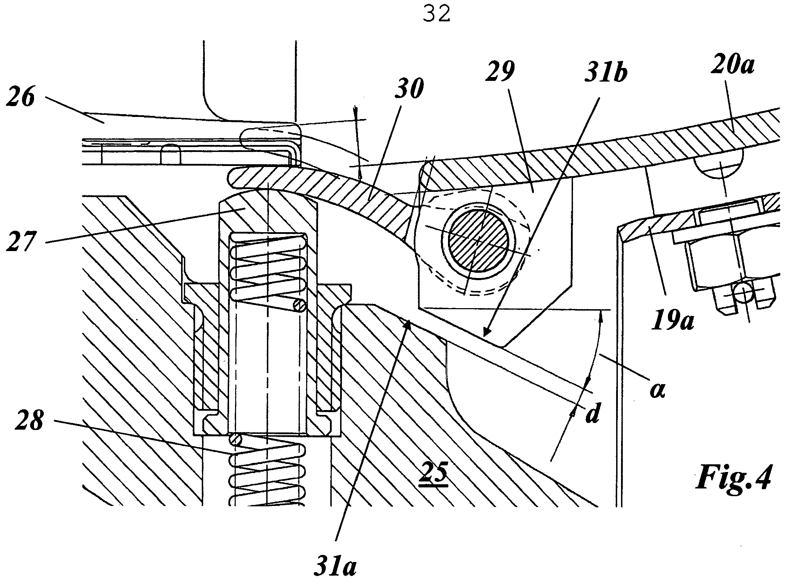

Im eingangs beschriebenen Übergangsbereich A ist der Übergang zwischen der inneren Brennkammerschale 20a mit ihrem Kühlhemd 19a und der inneren Wand des Turbineneinlasses (26 in Fig. 4) nun so gestaltet, dass er eine durch thermische Ausdehnung bedingte relative Verschiebung zulässt und aufnimmt. Der Abstand zwischen beiden Komponenten wird strömungstechnisch durch plattenförmige Übergangselemente (30 in Fig. 4) überbrückt, die einerseits an der inneren Brennkammerschale 20a verschwenkbar gelagert sind und andererseits an ihrem freien Ende durch mit einer Druckfeder (28 in Fig. 4) beaufschlagte Andruckbolzen (27 in Fig. 4) so gegen die Aussenseite der inneren Wand des Turbineneinlasses 26 gedrückt werden, dass sie quer zur Achse des Druckbolzens 27 verschiebbar sind. Auf diese Weise wird für die heissen Gase ein abgedichteter Übergang zwischen Brennkammer und Turbineneinlass verwirklicht, der eine relative Verschiebung beider Komponenten zueinander zulässt und ausgleicht.

Damit die Brennkammer während des Betriebs keine schädlichen Vibrationen ausführen kann, sind im Übergangsbereich Mittel vorgesehen, die eine Abstützung der Brennkammer an der Wellenabdeckung ermöglichen 25, wenn die mit dem Betrieb verbundene thermische Ausdehnung der Brennkammer ihren Abschluss gefunden hat. Diese Mittel umfassen eine Mehrzahl von radial abstehenden, in Achsenrichtung orientierten Abstützplatten (29 in Fig. 3, 4), die entlang dem inneren Umfang der inneren Brennkammerschale 20a angeordnet sind. Die Abstützplatten 29 weisen gleichzeitig Schwenklager (32 in Fig. 3) für die verschwenkbaren Übergangselemente 30 auf.

Die Abstützplatten 29 haben jeweils eine Anschrägung (31 b in Fig. 4), die mit der Maschinenachse einen vorgegebenen Winkel α einschliesst (siehe Fig. 4). In einem Abstand d (Fig. 4) liegt dieser Anschrägung 31 b eine konische Kontur (31 a in Fig. 4) der Wellenabdeckung 25 gegenüber, die mit der Maschinenachse denselben Winkel α einschliesst. Wenn sich die Brennkammer beim Anfahren der Gasturbine thermisch ausdehnt, bewegt sich die innere Brennkammerschale 20a mit den daran angebrachten Abstützplatten 29 in der in Fig. 3 eingetragenen Ausdehnungsrichtung 33 auf die konische Kontur 31 a zu, bis schliesslich die beiden Flächen 31 a und 31 b gegeneinander gepresst werden.

Bei einer aktuellen Gasturbine wurden die relativen radialen und axialen Bewegungen zwischen den Schnittstellenpartnern an der Schnittstelle zwischen Brennkammer und Turbineneintritt analysiert und es wurde dabei eine spezifische Gleitebene festgestellt. Diese spezifische Gleitebene wäre bei dieser Anwendung ca. 16°und wurde entsprechend im Design berücksichtigt (25°-Gleitebene).

Durch eine Simulation der transienten Bewegung im Brennkammerbereich mit Hilfe eines FE-Tools wurde ein spezifischer Gleitwinkel errechnet. Aufgrund der Wärmeausdehnungen entsteht eine zusätzliche Bewegung senkrecht zum Gleitwinkel welche zur Festlegung des optimierten Spiels benutzt wird. Für die verschiedenen Betriebszustände hat das FE-Tool einen Gleitwinkel von circa 15°-18° errechnet. Aufgrund dieser Ergebnisse hätte ein Gleitwinkel und somit auch ein Kontaktwinkel von weniger als 20° gewählt werden müssen. Unter Berücksichtigung des mechanischen Anspruches, dass nur eine Kontaktstelle pro Abstützplatte erwünscht ist (kein Flächenkontakt, nur Linienkontakt erwünscht) und die konische Vollrundschale nicht auch letztendlich wie eine Büchse auf einen konischen Keil auffährt und sich aufschrumpfen soll, wurde bewusst ein grösserer Winkel gewählt, in diesem Falle ein Winkel von 25°.

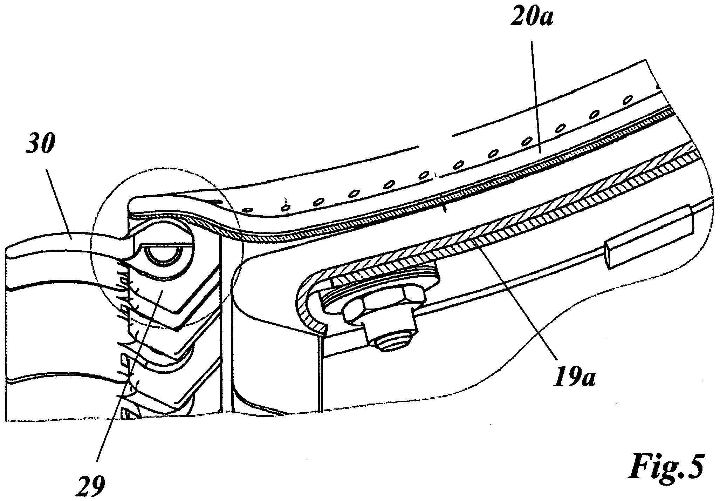

Ein Ausführungsbeispiel der Konfiguration des Übergangs gemäss der Erfindung ist in Fig. 4 bzw. 5 wiedergegeben. Eine wichtige Rolle spielt bei der Dimensionierung der Abstände und Winkel der Differenzwinkel Δα, den gemäss Fig. 3 die Ausdehnungsrichtung 33 bei thermischer Ausdehnung mit der Anschrägung 31 b bzw. Gleitfläche einschliesst.

Δα sollte im Bereich von 2°-15°, bevorzugt im Bereich von 5°-10°, insbesondere im Bereich 7°-8°, liegen.

Der Winkel α der Anschrägung 31 b mit der Maschinenachse liegt in diesem Fall zwischen 20° und 30°, bevorzugt zwischen 24° und 26°.

Die Einbautoleranz bzw. der Abstand d liegen im Bereich 1-10 mm, bevorzugt im Bereich 2-8 mm, insbesondere im Bereich 3-4 mm.

Die Einbautoleranz d ist dabei gleich dem Kaltspiel plus Fertigungstoleranz. Ein Kaltspiel ist erforderlich, weil die Teile sozusagen blind montiert werden.

Durch die Differenzwinkel Δα wandern die Bauteile beim Start der Gasturbine zusammen. Ein leichtes Andrücken ist erforderlich. Ein zu grosses Δα führt zum "Fressen" der Finnen. Ein zu kleiner Winkel Δα würde im Betrieb zu einem Spalt oder losem Aufliegen führen. Dies würde Vibrationen erlauben und ebenfalls zu Schäden führen.

Die angegebenen Grössen ergeben sich insbesondere für Gasturbinen der gezeigten Art, bei denen die Wellenabdeckung 25 aus Grauguss ist und das Material für die Finnen aus einer Nickelbasislegierung oder einem bevorzugt austenitisch ferritischer Stahl ausgewählt ist.

Für die segmentierte Ringbrennkammer sind dabei insbesondere pro Segment zwei Finnen bzw. Abstützplatten vorgesehen.

Im Falle einer Überarbeitung einer bereits bestehenden Gasturbine (Retrofit) werden existierende Wellenabdeckungen auf den Winkel α nachgearbeitet und die alten Finnen werden durch neue Finnen mit dem Winkel α ersetzt.

### BEZUGSZEICHENLISTE

- 10: Gasturbine
- 11: Lufteinlass
- 12: Verdichter
- 13: Brennkammer
- 14: Brennstoff
- 15: Turbine
- 16: Abgas
- 17: Rotor
- 18: Plenum
- 19a: inneres Kühlhemd
- 19b: äusseres Kühlhemd
- 20a: innere Brennkammerschale
- 20b: äussere Brennkammerschale
- 21a: innere Kühlluftführung
- 21b: äussere Kühlluftführung
- 22: Brenner (z.B. Doppelkegelbrenner)
- 23: Rückwand (Brennkammer)
- 24: Luft
- 25: Wellenabdeckung (Verdichter-Diffusor)
- 26: Turbineneinlass
- 27: Andruckbolzen
- 28: Druckfeder
- 29: Abstützplatte (Finne)
- 30: Übergangselement
- 31a: konische Kontur (Verdichter-Diffusor/Wellenabdeckung)
- 31b: Anschrägung (Abstützplatte)
- 32: Schwenklager
- 33: Ausdehnungsrichtung
- A: Übergangsbereich Brennkammer-Turbine
- d: Abstand (Einbautoleranz)
- α: Winkel (mit der Maschinenachse)
- Δα: Differenzwinkel

## Patentansprüche

1. Gasturbine (10), umfassend einen Verdichter (12), eine ringförmige Brennkammer (13) und eine Turbine (15), wobei die Brennkammer (13) zur Einleitung der in der Brennkammer (13) entstehenden heissen Gase in die nachfolgende Turbine (15) in einem Übergangsbereich (A) mit einer Brennkammerschale (20a) an den Turbineneinlass (26) derart anschliesst, dass eine durch thermische Ausdehnung bedingte relative Bewegung zwischen Brennkammer (13) und Turbineneinlass (26) möglich ist, und wobei die Brennkammerschale (20a) mit Abstützelementen (29) durch die im Betrieb auftretende thermische Ausdehnung (33) an eine konische Kontur (31 a) an einer Wellenabdeckung(25) anstösst und sich daran abstützt, **dadurch gekennzeichnet, dass** die konische Kontur (31a) mit der Maschinenachse einen Winkel (α) einschliesst, der ein Aufgleiten der Brennkammerschale (20a) mit am Austrittsende am Umfang verteilt angebrachten Abstützelementen (29) auf die konische Kontur (31 a) ermöglicht.

2. Gasturbine nach Anspruch 1, **dadurch gekennzeichnet, dass** die Abstützelemente als radial abstehende, in axialer Richtung orientierte Abstützplatten bzw. Finnen (29) ausgebildet sind, dass die Abstützplatten bzw. Finnen (29) eine der konischen Kontur (31a) gegenüberliegende und der konischen Kontur (31 a) im Winkel entsprechende Anschrägung (31 b) aufweisen und dass zwischen der konischen Kontur (31 a) und der Anschrägung (31 b) eine von Null verschiedene Einbautoleranz (d) vorgesehen ist.

3. Gasturbine nach Anspruch 2, **dadurch gekennzeichnet, dass** sich die Brennkammerschale (20a) bei ihrer thermischen Ausdehnung in eine Ausdehnungsrichtung (33) ausdehnt, die mit der konischen Kontur (31a) einen von Null verschiedenen Differenzwinkel (Δα) einschliesst damit die Abstützplatten bzw. Finnen (29) und die Wellenabdeckung(25) beim Start der Gasturbine zusammenwandern und andrücken.

4. Gasturbine nach Anspruch 3, **dadurch gekennzeichnet, dass** der Differenzwinkel (Δα) im Bereich zwischen 2° und 15°, im Bereich zwischen 5° und 10°, oder im Bereich zwischen 7° und 8° liegt, und dass der Winkel (α), den die konische Kontur (31a) mit der Maschinenachse einschliesst, zwischen 20° und 30°, oder zwischen 24° und 26° beträgt.

5. Gasturbine nach einem der Ansprüche 2-4, **dadurch gekennzeichnet, dass** die Einbautoleranz (d) im Bereich zwischen 1mm und 10mm, zwischen 2mm und 8mm, oder zwischen 3mm und 4mm, liegt.

6. Gasturbine nach einem der Ansprüche 1 bis 5, **dadurch gekennzeichnet, dass** die Wellenabdeckung (25) aus Grauguss ist und die Abstützelemente (29) aus einer Nickelbasislegierung oder einem 18/10-Cr-Ni-Stahl bestehen.

7. Gasturbine nach einem der Ansprüche 1 bis 6, **dadurch gekennzeichnet, dass** die Ringbrennkammer (13) aus einzelnen Segmenten zusammengesetzt ist, und dass pro Segment zwei Abstützelemente (29') vorgesehen sind.

8. Brennkammer-Innenschale (20a) für eine Gasturbine (10) die am Austrittsende auf der den Heissgasen abgewandten Seite am Umfang verteilte Abstützelemente (29) umfast, die eine Anschrägung (31 b) aufweisen, die im eingebauten Zustand parallel zu einer konische Kontur (31 a) einer Wellenabdeckung (25) verläuft und mit der Maschinenachse einen Winkel (α) einschliesst, der ein Aufgleiten der Abstützelementen (29) der Brennkammer-Innenschale (20a) auf die konische Kontur (31 a) der Wellenabdeckung (25) ermöglicht.

9. Wellenabdeckung (25) für eine Gasturbine (10), die am stromabwärtigen Ende auf der Aussenseite eine konische Kontur (31 a) aufweist, die im eingebauten Zustand mit der Maschinenachse einen Winkel (α) einschliesst, der ein Aufgleiten einer Brennkammer-Innenschale (20a) mit Abstützelementen (29) auf die konische Kontur (31 a) ermöglicht.

## Claims

1. Gas turbine (10) comprising a compressor (12), an annular combustor (13) and a turbine (15), wherein, for the purpose of introducing the hot gases produced in the combustor (13) into the downstream turbine (15), the combustor (13) adjoins the turbine inlet (26) in a transition region (A) with a combustor shell (20a) such that a relative movement, caused by thermal expansion, between the combustor (13) and the turbine inlet (26) is possible, and wherein, as a result of the thermal expansion (33) arising in operation, the combustor shell (20a) with support elements (29) abuts against a conical contour (31a) on a shaft cover (25) and rests thereon, **characterized in that** the conical contour (31a), with the machine axis, encloses an angle (α) which allows the combustor shell (20a) with attached support elements (29) distributed around the periphery at the outlet end to slide over the conical contour (31a).

2. Gas turbine according to Claim 1, **characterized in that** the support elements are designed as radially projecting, axially oriented support plates or fins (29), **in that** the support plates or fins (29) have a bevel (31b) opposite the conical contour (31a) and corresponding to the angle of the conical contour (31a), and **in that** a non-zero installation tolerance (d) is provided between the conical contour (31a) and the bevel (31b).

3. Gas turbine according to Claim 2, **characterized in that** as the combustor shell (20a) undergoes thermal expansion, this expansion occurs in an expansion direction (33) which, with the conical contour (31a), encloses a non-zero differential angle (Δα) in order that, when the gas turbine is started, the support plates or fins (29) and the shaft cover (25) move toward one another and bear against one another.

4. Gas turbine according to Claim 3, **characterized in that** the differential angle (Δα) is in the range between 2° and 15°, in the range between 5° and 10°, or in the range between 7° and 8°, and **in that** the angle (α), which the conical contour (31a) and the machine axis enclose, is between 20° and 30°, or between 24° and 26°.

5. Gas turbine according to one of Claims 2-4, **characterized in that** the installation tolerance (d) is in the range between 1 mm and 10 mm, between 2 mm and 8 mm, or between 3 mm and 4 mm.

6. Gas turbine according to one of Claims 1 to 5, **characterized in that** the shaft cover (25) is made of gray cast iron and the support elements (29) consist of a nickel-based alloy or an 18/10-Cr-Ni steel.

7. Gas turbine according to one of Claims 1 to 6, **characterized in that** the annular combustor (13) is composed of individual segments, and **in that** two support elements (29') are provided per segment.

8. Combustor inner shell (20a) for a gas turbine (10) which comprises, at the outlet end on the side facing away from the hot gases, support elements (29), which are distributed on the periphery and which have a bevel (31b) which in the installed state runs parallel to a conical contour (31a) of a shaft cover (25) and which, with the machine axis, encloses an angle (α) which allows the support elements (29) of the combustor inner shell (20a) to slide over the conical contour (31a) of the shaft cover (25).

9. Shaft cover (25) for a gas turbine (10), which at the downstream end on the outer side has a conical contour (31a) which in the installed state, with the machine axis, encloses an angle (α) which allows a combustor inner shell (20a) with support elements (29) to slide over the conical contour (31a).

## Revendications

1. Turbine à gaz (10) comprenant un compresseur (12), une chambre de combustion annulaire (13) et une turbine (15), la chambre de combustion (13), pour introduire les gaz chauds créés dans la chambre de combustion (13) dans la turbine suivante (15), se raccordant dans une région de transition (A) avec une coque de chambre de combustion (20a) à l'entrée de la turbine (26) de telle sorte qu'un mouvement relatif provoqué par la dilatation thermique soit possible entre la chambre de combustion (13) et l'entrée de la turbine (26), la coque de chambre de combustion (20a) butant avec des éléments d'appui (29), du fait de la dilatation thermique (33) se produisant pendant le fonctionnement, contre un contour conique (31a) au niveau d'un recouvrement d'arbre (25) et s'appuyant contre celui-ci, **caractérisée en ce que** le contour conique (31a) forme avec l'axe de la machine un angle (α) qui permet un glissement de la coque de chambre de combustion (20a), avec des éléments d'appui (29) répartis sur la périphérie à l'extrémité de sortie, sur le contour conique (31a).

2. Turbine à gaz selon la revendication 1, **caractérisée en ce que** les éléments d'appui sont réalisés sous forme de plaques d'appui ou d'ailettes (29) saillant radialement, orientées dans la direction axiale, **en ce que** les plaques d'appui ou les ailettes (29) présentent un biseautage (31b) correspondant angulairement au contour conique (31a) et opposé au contour conique (31a) et **en ce qu'**entre le contour conique (31a) et le biseautage (31b) est prévue une tolérance de construction (d) différente de zéro.

3. Turbine à gaz selon la revendication 2, **caractérisée en ce que** la coque de chambre de combustion (20a), lors de sa dilatation thermique, se dilate dans une direction de dilatation (33) qui forme avec le contour conique (31a) un angle différentiel différent de zéro (Δα) afin que les plaques d'appui ou les ailettes (29) et le recouvrement d'arbre (25) se rapprochent et pressent les uns contre les autres au démarrage de la turbine à gaz.

4. Turbine à gaz selon la revendication 3, **caractérisée en ce que** l'angle différentiel (Δα) est compris dans une plage de 2° à 15°, dans une plage de 5° à 10°, ou dans une plage de 7° à 8°, et **en ce que** l'angle (α) formé par le contour conique (31a) avec l'axe de la machine, est compris entre 20° et 30°, ou entre 24° et 26°.

5. Turbine à gaz selon l'une quelconque des revendications 2 à 4, **caractérisée en ce que** la tolérance de construction (d) est comprise dans une plage de 1 mm à 10 mm, de 2 mm à 8 mm, ou de 3 mm à 4 mm.

6. Turbine à gaz selon l'une quelconque des revendications 1 à 5, **caractérisée en ce que** le recouvrement d'arbre (25) est en fonte grise et les éléments d'appui (29) se composent d'un alliage à base de nickel ou d'un acier Cr-Ni 18/10.

7. Turbine à gaz selon l'une quelconque des revendications 1 à 6, **caractérisée en ce que** la chambre de combustion annulaire (13) est constituée de segments individuels et **en ce que** deux éléments d'appui (29') sont prévus pour chaque segment.

8. Coque interne de chambre de combustion (20a) pour une turbine à gaz (10) qui comprend à l'extrémité de sortie du côté opposé aux gaz chauds des éléments d'appui (29) répartis sur la périphérie, qui présentent un biseautage (31b) qui s'étend dans l'état monté parallèlement à un contour conique (31a) d'un recouvrement d'arbre (25) et qui forme avec l'axe de la machine un angle (α) qui permet un glissement des éléments d'appui (29) de la coque interne de la chambre de combustion (20a) sur le contour conique (31a) du recouvrement d'arbre (25).

9. Recouvrement d'arbre (25) pour une turbine à gaz (10), qui présente à l'extrémité aval du côté extérieur un contour conique (31a) qui dans l'état monté forme avec l'axe de la machine un angle (α) qui permet un glissement de la coque interne de la chambre de combustion (20a) avec des éléments d'appui (29) sur le contour conique (31a).
